# EUROPEAN PATENT APPLICATION

(11) **EP 1 977 803 A1**
(43) Date of publication of application: **08.10.2008**
(21) Application number: 07707297.3
(22) Date of filing: 24.01.2007
(51) Int. Cl.: A63H 27/18, A63H 27/00, B64C 39/02

(54) **PROPELLER PLANE TOY**

(30) Priority: 24.01.2006 JP 2006015089
(71) Applicant: Tomy Company, Ltd., Katsushika-ku Tokyo 124-8511 (JP)
(72) Inventor: MUNAKATA, Toshitatsu, Kawasaki-shi, Kanagawa 215-0022 (JP)
(74) Representative: Brookes Batchellor LLP
(86) International application number: PCT/JP2007/051046
(87) International publication number: WO 2007/086399

(57) **Abstract**

A reciprocating aircraft toy is composed of an airplane main body, the nucleus of which is made of a foamed plastics material, to fly by rotations of a propeller and to turn by rudder's rotations around a vertical axis from side to side, and a controller to remotely operate the rotations of the propeller and the rotations of the rudder. The rudder is configured so that a maximum rudder angle on a side of the airplane main body to which a propeller slipstream hits the rudder more strongly becomes smaller than a maximum rudder angle on the other side.

## Description

### Technical Field

The present invention relates to a reciprocating aircraft toy provided with an airplane main body and a controller to pilot the airplane main body.

### Background Art

Conventionally, an airplane toy that is provided with an airplane main body, which flies by the rotations of a propeller and turns by its rudder' s rotation to the left and the right sides around the vertical axis thereof, and a controller for remotely controlling the rotations of the propeller and the rotations of the rudder has been known (see, for example, Japanese Patent Application Laid-Open Publication No. Hei 7-40897).

### Disclosure of the invention

### Problem to be Solved by the Invention

When the rudder is rotated to the left side in view of the rear side of the airplane main body, the reciprocating aircraft toy turns to the left. When the rudder is rotated to the right side in view of the rear side thereof, the reciprocating aircraft toy turns to the right.
However, because the conventional reciprocating aircraft toy sets the rudder angles thereof to the same when it turns to the left and turns to the right, the following disadvantage has been produced in a reciprocating aircraft toy having the nucleus of the airplane main body made of a foamed plastics material for the sake of weight saving especially.
That is, in the reciprocating aircraft toy, airflow (propeller slipstream) is produced by the rotations of the propeller. The propeller slipstream flows to the rear side along the body of the propeller airplane main body with eddying. Then, the propeller slipstream does not evenly hit both of the left and the right sides of the airplane main body, but hits either of both the sides more strongly.
In this case, if the rudder angles of the rudder are set to be the same at both the times of a left turn and a right turn, then, when the rudder is rotated to the side which the propeller slipstream of the airplane main body hits the airplane main body more strongly, the propeller slipstream and the airflow owing to the flight speed hit the rudder. On the other hand, when the rudder is rotated to the opposite side, the airflow owing to the flight speed chiefly hits the rudder. As a result, a problem of the occurrence of variations on the turning performances on both sides is produced. Moreover, if the rudder is rotated to the side on which the propeller slipstream of the airplane main body hits the rudder more strongly, there is the danger of the fall of the airplane main body that receives the influence of the propeller slipstream strongly.

### Disclosure of the Invention

Accordingly, the present invention aims to provide a reciprocating aircraft toy having turning performance balanced on both the sides thereof.

### Means for Solving Problems

First aspect of the present invention provides a reciprocating aircraft toy, including: an airplane main body to fly by rotations of a propeller and to turn by rudder' s rotations around a vertical axis from side to side; and a controller to remotely operate the rotations of the propeller and the rotations of the rudder, wherein the rudder is configured so that a maximum rudder angle on a side of the airplane main body to which a propeller slipstream hits the rudder more strongly becomes smaller than a maximum rudder angle on another side.
Hereupon, the "rudder angle" indicates a rotation angle from a neutral position where the rudder has rotated neither to the left nor to the right. Moreover, the "left and right" indicate the left and the right of the airplane main body at the time of facing to the direction of flight. Moreover, the "vertical axis" indicates the up and down direction of the airplane main body.

Second aspect of the present invention provides the reciprocating aircraft toy according to the first aspect of the present invention, wherein the propeller is fixed on an upper side of a body of the airplane main body, and the maximum rudder angle on a same side as a rotation direction of the propeller is smaller between the maximum rudder angles on right and left sides.

Third aspect of the present invention provides the reciprocating aircraft toy according to the first or second aspect of the present invention, wherein a trim tab is fixed to the body of the airplane main body in a state in which a rear side portion of the trim tab is inclined to a center of the body in comparison with a front side portion of the trim tab in a direction of flight so as to break away from a side to which a propeller slipstream hits the trim tab more strongly between both sides of the airplane main body.

Fourth aspect of the present invention provides the reciprocating aircraft toy according to any one of the first to third aspects of the present invention, wherein the rudder is fixed to a rear end of the body.

Fifth aspect of the present invention provides the reciprocating aircraft toy according to any one of the first to fourth aspects of the present invention, wherein the rudder is configured so that maximum rudder angles of the rudder onto both sides may be regulated by stoppers on both the sides, the stoppers fixed to the body or a horizontal tail plane of the airplane toy.

Sixth aspect of the present invention provides the reciprocating aircraft toy according to the fifth aspect of the present invention, wherein the stoppers are configured by an edge of a notch formed on a rear side of the horizontal tail plane.

### Effect of the Invention

According to the first aspect of the present invention, because the rudder is configured so that the maximum rudder angle on the side of the airplane main body to which the propeller slipstream hits the rudder more strongly becomes smaller than the maximum rudder angle on the other side, the influences of the propeller slipstream can be reduced when the rudder is rotated to the side of the airplane main body on which the propeller slipstream hits the rudder more strongly. On the other hand, the influences of the airflow owing to a flight speed can be strengthened when the rudder is rotated to the opposite side. Consequently, the balance between the turning performances on both sides can be attained.

According to the second aspect of the present invention, because the propeller is fixed on the upper side of the body, the propeller slipstream hits the right side of the airplane main body more strongly. But, because the maximum rudder angle on the right side of the airplane main body is smaller than the maximum rudder angle on the left side, the influences of the propeller slipstream can be reduced when the rudder is rotated to the right side of the airplane main body. On the other hand, the influences of the airflow owing to the flight speed can be strengthened when the rudder is rotated to the left side. As a result, the balance of the turning performances on both sides can be achieved.

According to the third aspect of the present invention, the following advantages can be obtained in addition to the advantages of the first or second aspects of the present invention.
That is, because the trim tab is fixed to the body of the airplane main body in the state in which the rear side portion of the trim tab is inclined to the central axis of the body in comparison with the front side portion of the trim tab in the direction of flight so as to break away from the side to which the propeller slipstream hits the airplane main body more strongly between both sides of the airplane main body, the trim tab can reduce the influences of the propeller slipstream on the side onto which the propeller slipstream hits the airplane main body more strongly. On the other hand, the trim tab receives the influences of the airflow owing to the flight speed more strongly on the opposite side. As a result, the improvement of straight advance property can be attained.

According to the fourth aspect of the present invention, the following advantage can be obtained in addition to the advantages of any one of the first to the third aspects of the present invention.
That is, because the rudder is fixed to the rear end of the body, which is made to be comparatively strongly, the fixing of the rudder becomes easier.

According to the fifth aspect of the present invention, the following advantage can be obtained in addition to the advantages of any one of the first to the fourth aspects of the present invention.
That is, because the rudder is configured so that the maximum rudder angles are regulated by the stoppers fixed to the horizontal tail plane, rudder control becomes easy.

According to the sixth aspect of the present invention, the following advantage can be obtained in addition to the advantage of the fifth aspect of the present invention.
That is, because the stoppers are configured by the edges of the notch formed on the rear side of the horizontal tail plane, the stoppers can be easily fixed.

### Brief Description of Drawings

FIG. 1 is a perspective view showing the external appearance of a reciprocating aircraft toy;
FIG. 2 is a plan view of the reciprocating aircraft toy;
FIG. 3 is a view showing the attachment structure of a rudder, in which FIG. 3A is a side view and FIG. 3B is a plan view;
FIG. 4 is a block diagram showing the circuit configuration of a controller of the reciprocating aircraft toy; and
FIG. 5 is a block diagram showing the circuit configuration of the airplane main body of the reciprocating aircraft toy.

### Best Mode for Carrying Out the Invention

In the following, an airplane toy according to an embodiment of the present invention will be described with reference to the attached drawings.

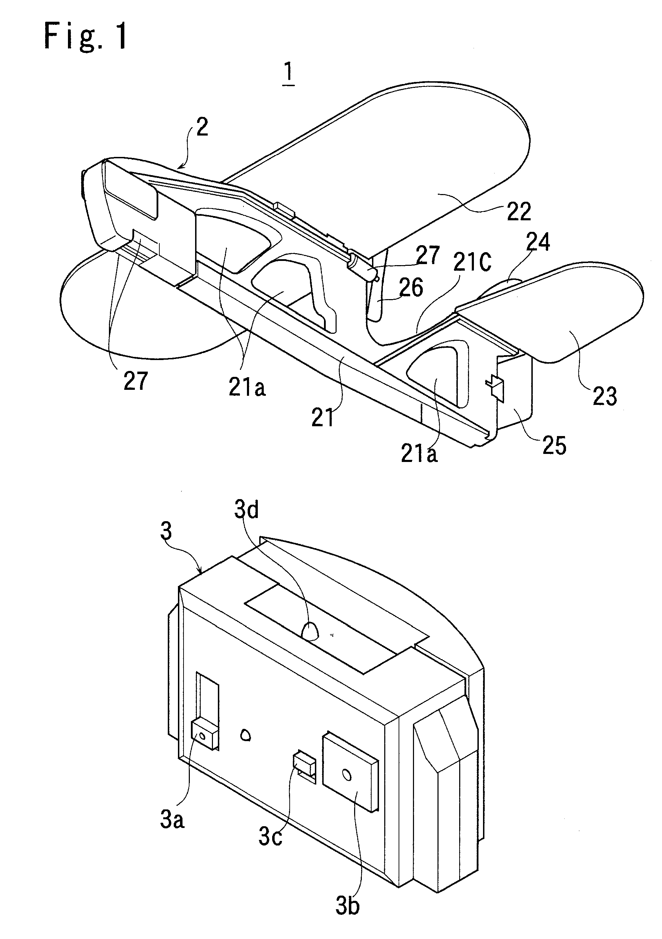

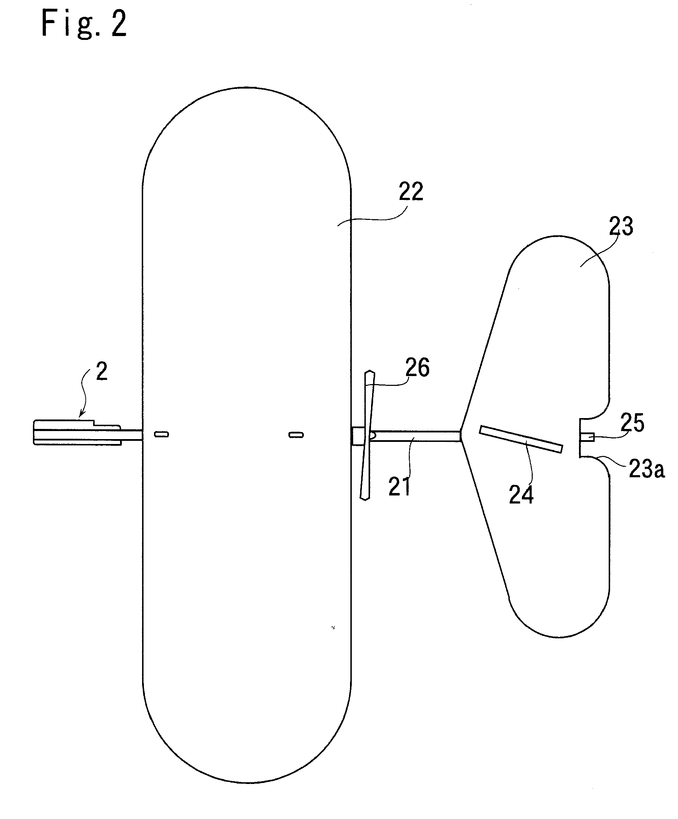

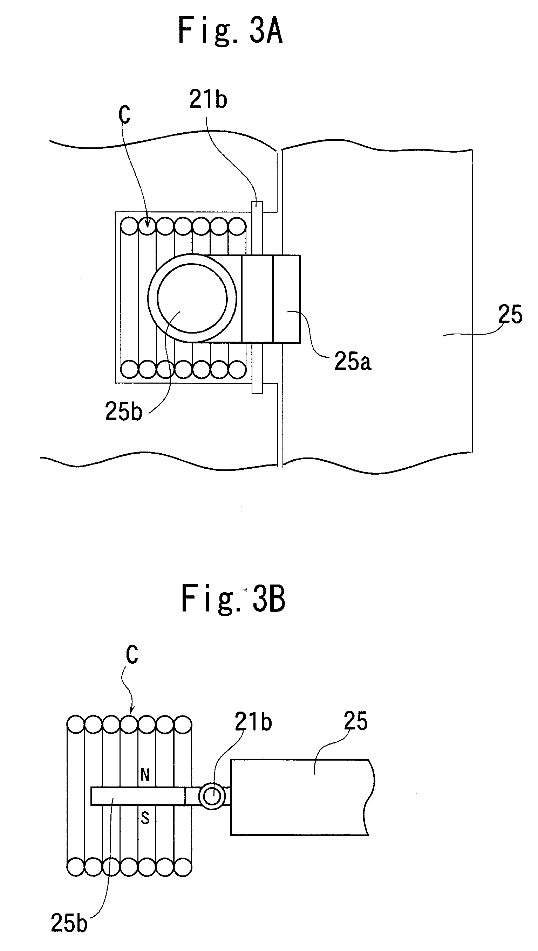

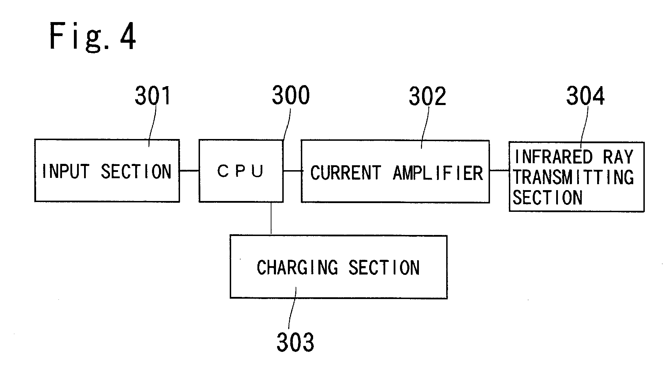

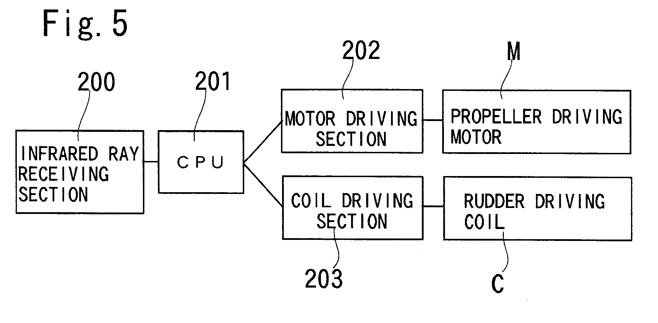

FIG. 1 is a perspective view of the reciprocating aircraft toy according to the present invention; FIG. 2 is a plan view of the airplane main body; FIG. 3 is a view showing the attachment structure of a rudder; FIG. 4 is a block diagram showing the circuit configuration of a controller; and FIG. 5 is a block diagram showing the circuit configuration of the airplane main body.

### (Whole Configuration of Airplane Toy)

As shown in FIG. 1, a reciprocating aircraft toy 1 is equipped with a small-sized light airplane main body 2 and a controller 3. The airplane main body 2 is piloted by the controller 3, and is adapted to be able to fly even in a narrow place such as in a room. In this case, the controller 3 is adapted to be able to adjust the flight speed of the airplane main body 2 and to make the airplane main body 2 perform the right and left turns.

### (Configuration of Airplane Main Body)

### 1. Whole Body

The nucleus of the airplane main body 2 is configured of, as shown in FIGS. 1 and 2, a body 21, a main wing 22, a horizontal tail plane 23, a trim tab 24, and a rudder 25. Then, these parts are made of a foamed plastics material. As the foamed plastics material of the airplane main body 2 of the embodiment, styrol series foamed plastics materials are used, but urethane series ones and the other ones may be used. In a word, a material having the strength necessary for the airplane main body 2 and being light may be used.

### 2. Main Wing

The left main wing and the right main wing of the airplane main body 2 of the embodiment are formed into one body as the main wing 22. Then, the main wing 22 is fixed on the upper front side of the body 21. However, the main wing 22 may be one integrated into one body on both of the right and left side ones to be fixed by being inserted into a slit formed on the body 21, or may be the ones separated on both the sides to be severally fixed to the body 21 on both the side thereof. Moreover, the main wing 22 may be fixed to the body 21 on the lower front side thereof.

### 3. Body

The body 21 is not specially limited, but is configured of a thick foamed plastics thin plate. A plurality of transparent holes 21a penetrating the body 21 from side to side is formed in the body 21. By forming the transparent holes 21a, the weight saving of the airplane main body 2 is achieved.
The upper side of the main wing 22 is cut off in the shape of a U letter on the rear side of the attachment part of the body 21 to the main wing 22. Then, a propeller driving motor M is fixed to the body 21 so that a propeller 26 may be situated in a notch 21a. The propeller driving motor M is controlled to be driven in conformity with a control signal from the controller 3. The propeller 26 of the airplane main body 2 of the embodiment is configured to rotate in a clockwise direction when it is viewed from the rear side of the airplane main body 2. However, it is a matter of course that the propeller 26 may be the one to rotate in a counterclockwise direction. Moreover, it is also a matter of course that the attachment position of the propeller 26 may be the front end of the body 21.
Moreover, as a result of forming the notch 21a in the body 21, the rear end portion of the notch 21a of the body 21 substantially functions as a vertical tail plane.

### 4. Horizontal Tail Plane

The horizontal tail plane 23 is fixed on the upper side of the rear end of the body 21. The right and the left side parts of the horizontal tail plane 23 are configured to be one body in the airplane main body 2 of the embodiment, although the configuration is not especially limited. Then, a notch 23a is formed at the center of the rear end side of the horizontal tail plane 23 in the horizontal direction. The notch 23a is bilaterally asymmetric in planar view. The notch 23a is provided for regulating the maximum rudder angles of the rudder 25 on both of the right and the left sides, and the edge of the notch 23a is adapted to function as stoppers of the rotation of the rudder 25. It is a matter of course that stoppers made of projections may be fixed onto both the sides of the under surface of the horizontal tail plane 23 in place of forming the notch 23a in the horizontal tail plane 23. Moreover, a stopper member shaped in a latter U opened to the rear side when it is viewed from the above may be fixed to the rear end of the body 21, and the base end portion of the rudder 25 may be situated between the mutually opposed two sides of the stopper member. Then, the maximum rudder angles of the rudder 25 may be regulated by the aforesaid two sides. In this case, the stopper member may be separated to right and left side ones.
Moreover, the trim tab 24 shaped like a vertical tail plane is fixed to protrude upward on the upper surface of the horizontal tail plane 23, although the shape of the trim tab 24 is not especially limited.

### 5. Trim Tab

The trim tab 24 is fixed in a state inclined from the central axis of the body 21 so that the rear side portion of the trim tab 24 may break away from the side on which propeller slipstream hits the trim tab 24 more strongly than the other side between both the sides of the airplane main body 2 to the front side portion of the trim tab 24. The reciprocating aircraft toy 1 of the embodiment is configured so that the propeller slipstream may hit the right side of the airplane main body 2 more strongly because the propeller 26 performs right-handed rotations when the airplane main body 2 is viewed from the rear side thereof. Consequently, the trim tab 24 is fixed to the body 21 to be inclined so that the rear side portion of the trim tab 24 may deflect to the left side of the airplane main body 2 than the front side portion thereof in the direction of flight when the trim tab 24 is viewed from the above.

### 6. Rudder

The rudder 25 is attached at the rear end of the body 21. The rudder 25 is coupled to a vertical shaft 21b fixed to the body 21 as shown in FIGS. 3 (A) and 3(B). That is, one end of a coupling member 25a is fixed to the rudder 25. The vertical shaft 21b is provided to be fixed to the coupling member 25a at an intermediate division of the coupling member 25a, or the intermediate division of the coupling member 25a is mounted onto the vertical shaft 21b. Then, the vertical shaft 21b is pivotally fitted to the body 21, or fixed thereto. As a result, the rudder 25 is adapted to be able to swing around the vertical shaft 21b from side to side. The other end side of the coupling member 25a is inserted into a rudder driving coil C fixed to the body 21. Then, a permanent magnet 25b is fixed to the insertion part. In this case, the permanent magnet 25b is fixed so that one of the N pole and the S pole thereof may be turned to any one of the right and the left of the airplane main body 2, and that the other of the N pole and the S pole is turned to the other one of the right and the left of the airplane main body 2. Then, the rudder 25 is adapted to rotate toward any one of the right and the left directions according to the flowing direction of a current when the current flows through the rudder driving coil C. Incidentally, in the state in which no currents flow through the rudder driving coil C, the rudder 25 is in a free state, although the state in this time is not specially defined. It is a matter of course that an urging unit such as a spring may be provided so as to hold the rudder 25 at a neutral position in the state in which no currents flow through the rudder driving coil C. Moreover, the structure in which coils are fixed onto both the sides of the permanent magnet to rotate the rudder 25 from side to side may be adopted. Alternatively, a coil may be provided on the side of the rudder 25 and the poles of the permanent magnet may be located on both the sides of the coil so that the poles having mutually different polarities may be opposed to the coil.
Incidentally, the rotation angles of the permanent magnet 25b around the vertical shaft 21b are set within the rudder driving coil C so that the rudder 25 can take the maximum rudder angles on both of the right and left directions.
Moreover, the rudder driving coil C is fixed to the body 21 so that the central axis line of the rudder driving coil C may deflect leftward to the central axis line of the body 21, and the coupling member 25a is abutted against the inner side of the rear end of the rudder driving coil C when the rudder 25 rotates from side to side. The maximum rudder angles of the rudder 25 on both the sides may be thus regulated. In this case, the inner side of the rudder driving coil C at the rear end thereof constitutes stoppers. In the case of the reciprocating aircraft toy 1 of the embodiment, because the propeller 26 performs the right-handed rotations, the central axis line of the rudder driving coil C is deflected leftward to the central axis line of the body 21. But, in the case where the propeller 26 performs the left-handed rotations, the central axis line of the rudder driving coil C is made to deflect to the opposite direction.

Moreover, the rudder 25 is formed in a rhomb, although the form is not especially limited. The upper end of the rear part of the rudder 25 faces to the notch 23 of the horizontal tail plane 23 mentioned above. The rudder 25 may be formed in a square, and a projection such as a pin may be fixed to the upper end of the rear part of the rudder 25. The projection may thus be faced to the notch 23a of the horizontal tail plane 23.
The rudder 25 is adapted so that the rotations thereof are regulated by the edge of the notch 23a when the rudder 25 rotates from side to side. The edge of the notch 23a is configured so that the maximum rudder angle on the side on which the propeller slipstream hits the airplane main body 2 more strongly between both the sides of the airplane main body 2 may be smaller than the maximum rudder angle on the other side. In the reciprocating aircraft toy 1 of the embodiment, the propeller 26 is adapted to perform right-handed rotations when the airplane main body 2 is viewed from the rear side thereof, and the propeller slipstream hits the right side of the airplane main body 2 more strongly. Consequently, the notch 23a is formed so that the maximum rudder angle on the right side may be smaller than the maximum rudder angle on the left side.

### 7. Others

Incidentally, the body 21 is provided with a rechargeable battery, and various electronic parts and electric circuits that are necessary for performing operation control of the propeller 26 and the rudder 25 in conformity with the control signals from the controller 3. Moreover, terminals 27 to perform the charging of the rechargeable battery with the power source of the controller 3 is fixed to the under side of the nose of the body 21. As the rechargeable battery in this case, although it is not especially limited, a lithium polymer battery, a nickel cadmium rechargeable battery, an electric double layer capacitor, or capacitor is provided. Among them, the lithium polymer battery has characteristics such as a high capacity, a high voltage, and a light weight.

### (Configuration of Controller 3)

As shown in FIG. 1, the controller 3 is provided with a propeller controlling knob 3a and a rudder controlling knob 3b. The propeller controlling knob 3a among them is the one for controlling the rotation speed of the propeller 26. On the other hand, the rudder controlling knob 3b is a seesaw type one, and is the one for rotating the rudder 25 from side to side. Moreover, a power source switch 3c and an infra1red LED 3d are fixed to the controller 3.

FIG. 4 is a block diagram showing the circuit configuration of the controller 3. As shown in the same figure, the controller 3 is equipped with a CPU 300, an input section 301, a current amplifying section 302, a charging section 303, and an infrared ray transmitting section 304. The charging section 303 is the one for charging the battery of the airplane main body 2. Incidentally, a battery, which is a power source, is incorporated in the controller 3, although the battery is not shown.

The input into the input section 301 is performed with the propeller controlling knob 3a and the rudder controlling knob 3b here. The CPU 300 is made of a one-chip microcomputer including a not-shown ROM and a RAM. The CPU 300 generates control data on the basis of the operation information input from the input section 301, and transmits a control signal from the infrared LED 3d to the airplane main body 2 through the current amplifying section 302 and the infrared ray transmitting section 304.

### (Circuit Configuration of Airplane Main Body 2)

FIG. 5 is a block diagram showing the circuit configuration of the airplane main body 2. As shown in the same figure, the airplane main body 2 is equipped with an infrared ray receiving section 200, a CPU 201, a motor driving section 202, and a coil driving section 203. The CPU 201 extracts the control data included in an infrared signal detected by the infrared ray receiving section 200. The CPU 201 is made of a one-chip microcomputer including a not-shown ROM and a RAM. The CPU 201 stores the control data into the RAM, and controls the operations of the airplane main body 2 in conformity with the program of the ROM.

The motor driving section 202 performs the drive stopping of the propeller driving motor M, the drive starting of the motor M, and the changing of the rotation speeds of the motor M in conformity with the instruction of the CPU 201 here. On the other hand, the coil driving section 203 performs the power distribution stopping to the rudder driving coil C, the power distribution starting to the rudder driving coil C, the changing of the directions of the currents to be supplied to the rudder driving coil C in conformity with the instructions of the CPU 201.

In the above, although the embodiment of the present invention has been described, the present invention is not limited to this embodiment, but it is needless to say that various modifications can be performed without departing from the spirit and the scope of the invention.
For example, although the airplane main body 2 is piloted (remotely controlled) with the infrared rays in the embodiment described above, it is a matter of course that the airplane main body 2 can be remotely controlled by electric waves.

### Industrial Applicability

The present invention can be suitably used not only for the reciprocating aircraft toys the nuclei of which are made of a foamed plastics material, but also for reciprocating aircraft toys that have saved weights and are strongly influenced by their turning performances by propeller slipstreams generally.

## Claims

1. A reciprocating aircraft toy, comprising:
an airplane main body to fly by rotations of a propeller and to turn by rudder's rotations around a vertical axis from side to side; and
a controller to remotely operate the rotations of the propeller and the rotations of the rudder, wherein
the rudder is configured so that a maximum rudder angle on a side of the airplane main body to which a propeller slipstream hits the rudder more strongly becomes smaller than a maximum rudder angle on another side.

2. The reciprocating aircraft toy according to claim 1, wherein the propeller is fixed on an upper side of a body of the airplane main body, and the maximum rudder angle on a same side as a rotation direction of the propeller is smaller between the maximum rudder angles on right and left sides.

3. The reciprocating aircraft toy according to claim 1 or 2, wherein a trim tab is fixed to the body of the airplane main body in a state in which a rear side portion of the trim tab is inclined to a center of the body in comparison with a front side portion of the trim tab in a direction of flight so as to break away from a side to which a propeller slipstream hits the trim tab more strongly between both sides of the airplane main body.

4. The reciprocating aircraft toy according to any one of the claims 1 to 3, wherein the rudder is fixed to a rear end of the body.

5. The reciprocating aircraft toy according to any one of the claims 1 to 4, wherein the rudder is configured so that maximum rudder angles of the rudder onto both sides may be regulated by stoppers on both the sides, the stoppers fixed to the body or a horizontal tail plane of the airplane toy.

6. The reciprocating aircraft toy according to claim 5, wherein the stoppers are configured by an edge of a notch formed on a rear side of the horizontal tail plane.
